(19) Europäisches Patentamt

European Patent Office

Office européen des brevets

(11) **EP 4 535 801 A1**

(12) **EUROPEAN PATENT APPLICATION**

(43) Date of publication:
**09.04.2025 Bulletin 2025/15**

(21) Application number: **24204751.2**

(22) Date of filing: **04.10.2024**

(51) International Patent Classification (IPC):
*H04N 21/845* [(2011.01)]   *H04L 65/1089* [(2022.01)]
*H04L 65/611* [(2022.01)]   *H04N 21/234* [(2011.01)]
*H04N 21/2187* [(2011.01)]   *H04N 21/262* [(2011.01)]
*H04N 21/81* [(2011.01)]

(52) Cooperative Patent Classification (CPC):
**H04L 65/1089; H04L 65/611; H04N 21/2187;
H04N 21/23424; H04N 21/26258; H04N 21/812;
H04N 21/8456**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.10.2023   NL 2035970**

(71) Applicant: **Liberty Global Europe Holding B.V.
1119 PE Schiphol-Rijk (NL)**

(72) Inventor: **Parnell, Crawford
Moffat, DG10 9NH (GB)**

(74) Representative: **Nederlandsch Octrooibureau
P.O. Box 29720
2502 LS The Hague (NL)**

(54) **METHODS FOR ADVERTISEMENT PLACEMENT**

(57)     A method for a server device and client for hybrid manifest manipulation, the method comprising receiving, from a client device by a communication unit, an advertisement placement request including break information and client device information, receiving, from the advertisement server by the communication unit, information of one or more targeted adverts to be replaced or added, receiving, from an advertisement media server by the communication unit, a manifest of each advert to be replaced or added, manipulating, by a processor, the received manifest of each advert to be replaced or added based on the client device information; and transmitting, to the client device by the communication unit, the manipulated manifest

**Fig. 7**

EP 4 535 801 A1

**Description**

FIELD OF THE INVENTION

The invention relates to a method and device to balance load when delivering content over Linear Internet Protocol (IP).

BACKGROUND OF THE INVENTION

Video delivery (over IP) is becoming the cable companies' preferred roadmap choice of delivery of Live Linear services, removing the need for wasteful Quadrature Amplitude Modulation (QAM) frequency carries, and replacing them with more Data Over Cable Service Interface Specifications (DOCSIS) channels, hence increasing the broadband data bandwidth on the cable plant. Though, unlike Cable QAM, Digital terrestrial or Digital Satellite (which are one to many distribution by their nature), Linear TV over IP is delivered by Uni-cast. Distribution of these Live Linear TV channels, face issues related to a) content delivery network (CDN) capacity for unicast services, ii) overuse of bandwidth on the local Hybrid Fiber-Coax (HFC) networks (and even upstream in the backbone and Fiber to the home (FTTH) services)
Furthermore, with broadcasters signing carriage deals with cable firms for their Live Linear channels, where target advertising must be deployed, via advert replacement (where replacements over the break/spot can be unique per a user), a third & fourth challenge arise iii) dealing with the storm of requests/responses to the backend/ADS for advert opportunities at the time of the Spot, and iv) all clients fall back to uni-cast delivery to playback the targeted adverts at each break/spot, causing a video download Uni-cast storm.
The storm of requests/responses for advert opportunities has been mitigated in current QAM transport stream delivered architectures, by using pre-triggers in the broadcast stream. With ABR, when you considered how the ecosystem works, using pre-triggers in the transport stream (before packaging) is not a viable solution.
With the use of Available Bit Rate (ABR) to deliver Linear IP channels, there is an advantage that the Live Linear IP channel is normally 10 seconds to 30 seconds behind live (due to distribution chain and buffering in the client), so the requesting / responses can be executed slightly in advance of live (adding a small load balance). Though with more demand for Common Media Application Format (CMAF)'s low latency ecosystem, this advantage is being eroded.
Another technology being deployed for Linear IP is the use Multicast Adaptive Bit Rate (mABR). This has been developed to overcome CDN scaling and network bandwidth challenges, bringing together the ability (and advantage) of Point-to-multipoint multicast and the advantages of ABR. However, the advantages of multicast are destroyed (for targeting advertising) as all clients fall back to uni-cast delivery to playback the targeted adverts at each break/spot.
In current deployed architectures, knowing the campaigns and how they target the households (using profile audience data of the customers), gave an advantage in that the targeted adverts could be delivered to the client in advance, hence stopping the storm. Though the broadcasters are now insisting on using their own Advert Decisioning Service (ADS), where the cable firm has no knowledge or understanding of the campaigns. Additionally, the broadcaster holds the profile data of the customer, therefore it is not possible to intelligently deliver targeted adverts to the set-top box (STB)/client in advance of a break.
Though with the knowledge of the advert break/spot schedule in advance, these challenges can be mitigated, by using load balancing techniques with the back office components and clients, stopping the sudden fallback to the unicast storms and overloading the backend services/CDNs.
It would be advantageous to implement a load balancing system for delivering content over linear IP using uni-cast.

SUMMARY OF THE INVENTION

An object of the invention is to implement a load balancing system for delivering content over linear IP in an efficient and cost-effective way.
In this way, the client devices will send advertismeent placement requests to the server device at different times during the pre-triger part of the active break window.
This allows to spread the advertsiement replacement requests from clients over time, thereby avoiding that all requests are received at the same time and reducing the load on the advertisement server at a certain time. This also allows to signal a break in advance to the client device.
According to a first aspect of the invention a method for a server device for load balancing live targeted advertising, as well as a server device comprising a processor configured to perform the method. The method comprising: receiving, from a client device, a break request for a channel; determining whether the break request has been received within a current active break window for the channel; and if the break request has been received within the current break window for the channel, sending to the client device information identifying the current break corresponding to the current active break window of the channel; if the break request has not been received within the current break window for the channel, sending to the client device a next polling period, wherein the next polling period indicates the client device when to send a further break request for a next break.

According to an embodiment, the method further comprising, if the break request has not been received within the current break window for the channel, receiving from the client a further break request for the channel after a time period equal to the next polling period has passed from the reception of the break request.

According to an embodiment, the next polling period is a prefetch polling period if the break request has not been received within the current break window for the channel.

According to an embodiment, the method further comprising, if the break request has been received within the current break window for the channel, sending to the client device a next polling period calculated as a random polling period.

According to an embodiment, the random polling period is calculated based on information identifying the client device.

According to an embodiment, the information identifying the client device is a positive number and the random period is calculated as:

$$\left( \frac{perfetch\ polling\ period}{2} \right) + Modulo\ [\frac{information\ identifying\ the\ client\ device}{\frac{perfetch\ polling\ period}{2}}]$$

According to an embodiment, the method further comprising determining whether the break request is a first break request for the channel received from the client device and, if the break request is the first break request, sending to the client the prefetch polling period as the next polling period.

According to an embodiment, the break request comprises information indicating whether the break request is a first break request for the channel received from the client device and wherein determining whether the break is the first break is based on the information indicating whether the break request is a first break request for the channel received from the client device.

According to an embodiment, the method further comprising receiving, from a content provider server, information related to the current break window.

According to an embodiment, the information related to the current break window comprises information identifying spots of the break period of the current active break window.

According to a second aspect of the invention, a method for a user device for load balancing live targeted advertising is provided, as well as a client device comprising a processor configured to perform the method. The method comprising: sending, to a server device, a break request for a channel; if the break request has been received within a current break window for the channel, receiving from the server device information identifying a current break corresponding to the current active break window of the channel; if the break request has not been received within the current break window for the channel, receiving from the server device a next polling period, wherein the next polling period indicates the client device when to send a further break request for a next break.

According to third aspect of the invention, a method for a server device and client for hybrid manifest manipulation is provided. The method comprising receiving, from a client device, an advertisement placement request including break information and client device information; receiving, from the advertisement server, information of one or more targeted adverts to be replaced or added; receiving, an advertisement media server, a manifest of each advert to be replaced or added; manipulating the received manifest of each advert to be replaced or added based on the client device information; and transmitting, to the client device, the manipulated manifest.

According to an embodiment, the method further comprising transmitting, to the advertisement server, one or more messages requesting the information on the one or more adverts to be replaced or added based on the break information.

According to an embodiment, the method further comprises for each of the one or more adverts to be replaced or added, transmitting, to the advertisement media server, a message requesting the manifest of corresponding advert.

According to an embodiment, the manipulating the received manifest comprises removing renditions of the received advert manifests.

According to an embodiment, the client device information comprises at least one of client device capability and client device type.

According to an embodiment, each of the renditions of the advert manifest corresponds to a different quality version of the advert.

According to an embodiment, the method further comprising removing renditions corresponding to quality versions of the advert unsuitable for the client device capability or type.

According to an embodiment, the manipulating the received manifest comprises adding metadata associated with monetization of adverts to be replaced or added.

According to fourth aspect of the invention a method for a client device for load balancing manifest manipulation is provided. The method comprising: transmitting, to a server device, an advertisement placement request including break information and client device information; receiving, from the server device, a manipulated advert manifest; and modifying a live channel manifest based on the manipulated advert manifest; wherein the manipulated advert manifest has been manipulated by the server device based on the client device information.

According to a further aspect, a method for a server device and client for hybrid manifest manipulation is provided, the method comprising:

- receiving, from a client device by a communication unit, an advertisement placement request including break information and client device information;
- receiving, from the advertisement server by the communication unit, information of one or more targeted adverts to be replaced or added;
- receiving, from an advertisement media server by the communication unit, a manifest of each advert to be replaced or added;
- manipulating, by a processor, the received manifest of each advert to be replaced or added based on the client device information; and
- transmitting, to the client device by the communication unit, the manipulated manifest.

The method may further comprise transmitting, to the advertisement server by the communication unit, one or more messages requesting the information on the one or more adverts to be replaced or added based on the break information.

The method may also comprise, for each of the one or more adverts to be replaced or added, transmitting, to the advertisement media server by the communication unit, a message requesting the manifest of corresponding advert.

Manipulating the received manifest may comprise removing, by the processor, renditions of the received advert manifests.

The client device information may comprise at least one of client device capability and client device type.

Each of the renditions of the advert manifest may correspond to a different quality version of the advert.

The method may comprise removing, by the processor, renditions corresponding to quality versions of the advert unsuitable for the client device capability or type.

Manipulating the received manifest may comprise adding metadata associated with monetization of adverts to be replaced or added.

According to another aspect, a method for a client device for load balancing manifest manipulation is provided, the method comprising:

transmitting, to a server device by the communication unit, an advertisement placement request including break information and client device information;

receiving, from the server device by the communication unit, a manipulated advert manifest; and

modifying, by a processor, a live channel manifest based on the manipulated advert manifest;

wherein the manipulated advert manifest has been manipulated in the server device based on the client device information.

The person skilled in the art will understand that the features described above may be combined in any way deemed useful. Moreover, modifications and variations described in respect of the system may likewise be applied to a method.

BRIEF DESCRIPTION OF THE DRAWINGS

In the following, aspects of the invention will be elucidated by means of examples, with reference to the drawings. The drawings are diagrammatic and are not drawn to scale.

Fig. 1 shows a schematic of a system for load balancing content delivery according to an embodiment of the invention.
Fig. 2 shows a schematic of the messages interchange in the system of fig. 1 to provide load balancing content delivery according to an embodiment of the invention.
Fig. 3 shows an example of a break window according to an embodiment of the invention.
Fig. 4 shows a flowchart of a method for determining a polling period.
Fig. 5 shows a graph with a comparison of the received break requests at the server device over time when using prior art methods and a method according to the invention.

Fig. 6 shows a schematic of a system for hybrid manifest manipulation processing according to an embodiment of the invention.

Fig. 7 shows a schematic of the messages interchange in the system of fig. 6 to provide hybrid manifest manipulation processing according to an embodiment of the invention. Fig. 8 shows an example of an advert manifest according to an embodiment of the invention.

Fig. 9 shows an example of a manipulated manifest according to an embodiment of the invention.

Fig. 10 shows an schematic diagram of an electronic device which implements an embodiment of the invention.

DETAILED DESCRIPTION OF EMBODIMENTS

In the figures, the same reference numbers indicate elements that are similar in structure and function.

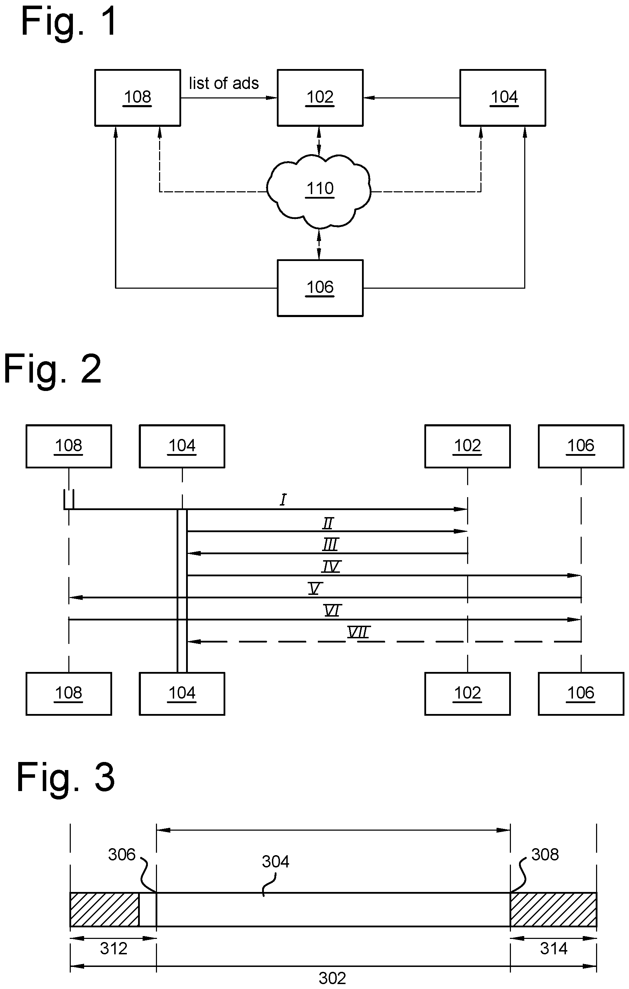

Fig. 1 shows a schematic of a system for load balancing content delivery according to an embodiment of the invention. The system of fig. 1 comprises an advertisement server 108, a server device 102, a client device 104 and an advertisement processor 106. The advertisement server 108 is configured to communicate with the server device 102 and with the advertisement processor 106. The client device 104 is arranged to communicate with the server device 102 and with the advertisement processor 106. The advertisement processor 106 is configured to receive identifiers of the physical files containing the advertisements from the advertisement server. The received identifiers allow the advertisement processor to access the physical files to perform some processing of those physical files before sending them to the client device 104. The physical files containing the advertisements may be video assets.

The client device 104 may be a set-top box. The client device 104 may be a smart TV or any other kind of suitable device.

Fig. 2 shows a schematic of the messages interchange in the system of fig. 1 to provide load balancing content delivery according to an embodiment of the invention.

Fig. 3 shows an example of a break window 302 according to an embodiment of the invention. The break window 302 comprises a break 304 with a duration from a break start time 306 until a break end time 308. The break 304 is the period during which advertisements are emitted and comprised a plurality of spots. The break window 302 also comprises a start offset period 312 and an end offset period 314. These offset periods provide back up when the break start and end times are not precise meaning that an advertisement period may start earlier or later than what is indicated by these times. Finally, the break window comprises a best effort period extending from the end of the start offset period 312 and the break start time 306.

In fig. 2, the advertisement server 108 transmits a message 1 (I) to the server device 102. The message 1 comprises break information. The break information of message 1 may comprise a list of breaks per channel. The list of breaks per channel may comprise, for each break in the list, a break identifier of the break, a start time of the break and a duration of the break. Optionally, the list of breaks may comprise as well a list of spots for each break in the list.

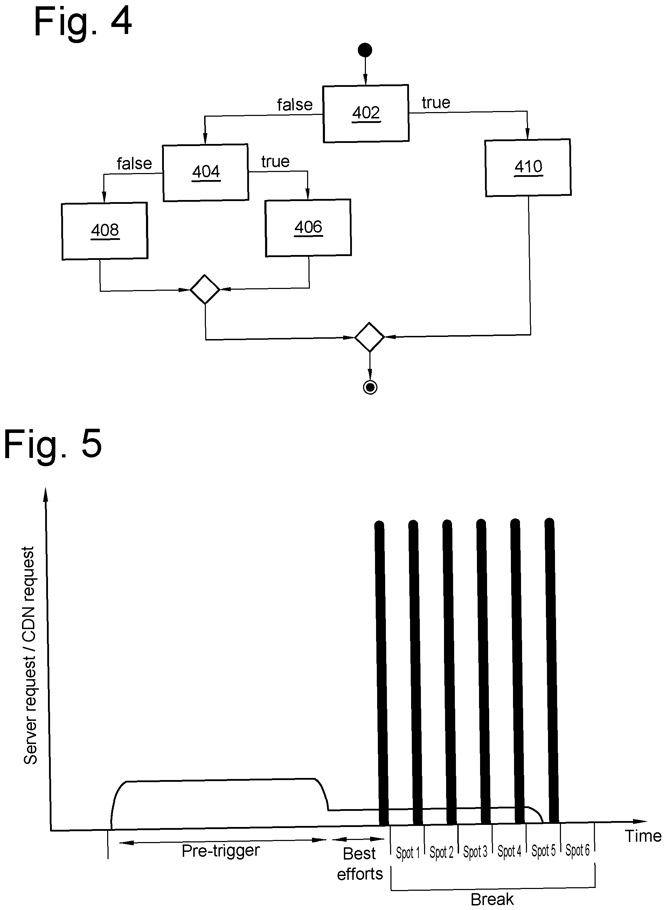

Then, and as shown in fig. 2, the client device, after joining a channel, may transmit a message 2 (II) comprising a break request for said channel to the server device 102. The server device 102, after receiving the break request from the client device 104, will determine whether the break request has been received within the current active break window 302 of the channel. If the break request 2 has been received within the current active break window 302 of the channel, the server device will send a message 3 (III) an identifier of the current break 304 to the client device 104. If the break request 2 has not been received within the current active break window 305 of the channel, the server device will send in the message 3 information of the next polling period available for the client device for the channel. When the break request 2 is received within the active break window 302, the message 3 shall contain also information of the next polling period for the client device for the channel. The calculation of the next polling period will be explained in relation to fig. 4.

When the break request 2 is received within the current active break window 302, the client device 104 sends a message 4 (IV) based on the identifier of the current break 304 to the advertisement processor 106. The message 4 comprises an advertisement placement request for the current break 304 for the current channel. Based on the advertisement placement request received in message 4, the advertisement processor 106 sends also an advertisement placement request in message 5 (V) to the advertisement server 108 and receives message 6 (VI) comprising an advertisement placement response from the advertisement server 108. The advertisement placement response may comprise a list of spots comprised within the current break period 304 that can be used for targeted advertisement. The advertisement processor 106 performs some processing of the information contained in the advertisement placement response in message 6 and, based on said processing, sends a message 7 (VII) containing targeted advertisement information for the list of spots to the client device 104. The client device 104 performs advertisement replacement based on the targeted advertisement information.

When the break request 2 is not received within the current active break window 302, the client device 104 will wait until the next polling period that was received from the server device has expired and, at that moment, send a new break request to the server device.

Fig. 4 shows a flowchart of a method for determining a polling period by the server device 102 when a message 2 comprising a break request has been received from the client device. The message 2 may comprise a field indicating whether the break request for this channel is the first break request received from this client device. In step 402, the method of fig. 4 determines whether the break request for the channel received from the client device 104 is the first break request received from said client device for said channel. If the method of fig. 4 determines in step 402 that the break request is the first break request, the method proceeds to step 404 to determine whether the break request for the channel received from the client device 104 has been received within the active break window 302.

If the method of fig. 4 determines in step 404 that the break request has been received within the active break window 302, the method proceeds to step 406 wherein the server device 102 determines that the next polling period to be sent to the client device in message 3 is equal to a random polling period. The random polling period may be calculated based on as prefetch polling period and an identifier of the client device. In this way, every client will get a different random polling period and the break requests messages of different clients may be received at different times thereby avoiding to overload the server device 102. The random polling period may be calculated as follows:

$$\text{Random polling period} = \left(\frac{perfetch\ polling\ period}{2}\right) + Modulo\ \left[\frac{identifier\ client\ device}{\frac{perfetch\ polling\ period}{2}}\right]$$

The prefetch polling period may be any predefined period and may be configured by the server device or received by the server device. The prefetch polling period may be, for instance, two minutes.

If the method of fig. 4 determines in step 404 that the break request has not been received within the active break window 302, the method proceeds to step 408 wherein the server device 102 determines that the next polling period to be sent to the client device in message 3 is equal to the prefetch polling period.

If the method of fig. 4 determines in step 402 that the break request is not the first break request, the method proceeds to step 410 wherein the server device 102 determines that the next polling period to be sent to the client device in message 3 is equal to the prefetch polling period.

Fig. 5 shows a graph with a comparison of the received break requests at the server device over time when using prior art methods and a method according to the invention.

According to another aspect of the invention, a load balancing manifest manipulation will be described hereinafter.

Manifest manipulation is used to replace or insert adverts in, for example, adaptive bitrate video (ABR) services. As part of the manipulation process, video renditions of the replaced or inserted advert are matched with the renditions of the original manifest (channel manifest) to ensure a consistent customer experience. Renditions refers to the multiple versions of a video, each at a different quality, in order to support different network conditions. The manifest manipulation allows the manipulator to adjust the manifest appropriately for each client device and match the format of the new adverts to be inserted during a break. For example, inserting 4K adverts in 4K streams targeting 4K client devices and lower bitrate adverts in lower bitrate streams targeted to other client devices such as phones.

In live broadcast, the manifest is continually updated and a new manifest is requested by the client device at regular intervals. In case where targeted advertising is used, the manifest produced (after manipulation) for each individual client device is unique, due to the combination of adverts that are inserted for each client device.

Generally, there are two types of advert insertion methods: a Client-Side Advert Insertion (CSAI) and a Server-Side Advert Insertion (SSAI). The CSAI is the method of delivering adverts to client devices where the client device requests an advert to an advert server when the client device reaches an advert-markers in the manifest, that is when a break is reached. After receiving the advert request, the advert server returns a targeted advert based on data collected from the client device. The SSAI is the method that inserts targeted adverts into video streams during playback all of which happens on the server-side before presenting a manifest to client devices.

Manifest manipulation puts a strain on the processing capability of client devices due to the intensive processing required, this includes processing the advert response, downloading the advert manifest and manipulating the advert manifest. This intensive processing makes CSAI unreliable and often leads to a bad user experience. The intensive processing requirement is better suited to SSAI where more computing power is available. However, due to the nature of a live channel, the SSAI must maintain the session at all times as live ABR manifests contain a historical element. With large quantity of simultaneous sessions, this makes the advertising insertion process using SSAI intensive, thereby, increasing significantly the overall cost of live streaming.

In order to overcome those problems, a splitting of the processing load caused by manifest manipulation (when inserting advertisements) between both the server device and the client device is provided.

The invention uses the client device to manipulate the live manifest, which means that the server device can become stateless as the historical part of the manifest is maintained in the client. The server device processes the advert placement, makes a request to the advertisement server device, obtains a response and processes the advert manifests in order to remove processing load from the client device. In this way, the client device sends an advertisement placement request to the server device before an advertisement is due to be replaced. Afterwards, the server device transmits a placement request to an advertisement server. On receiving the placement response from the advertisement server, the server device obtains the advertisement manifest and manipulates the advertisement manifest so that the client device is able to directly place the advertisement manifest in the live manifest without further manipulation.

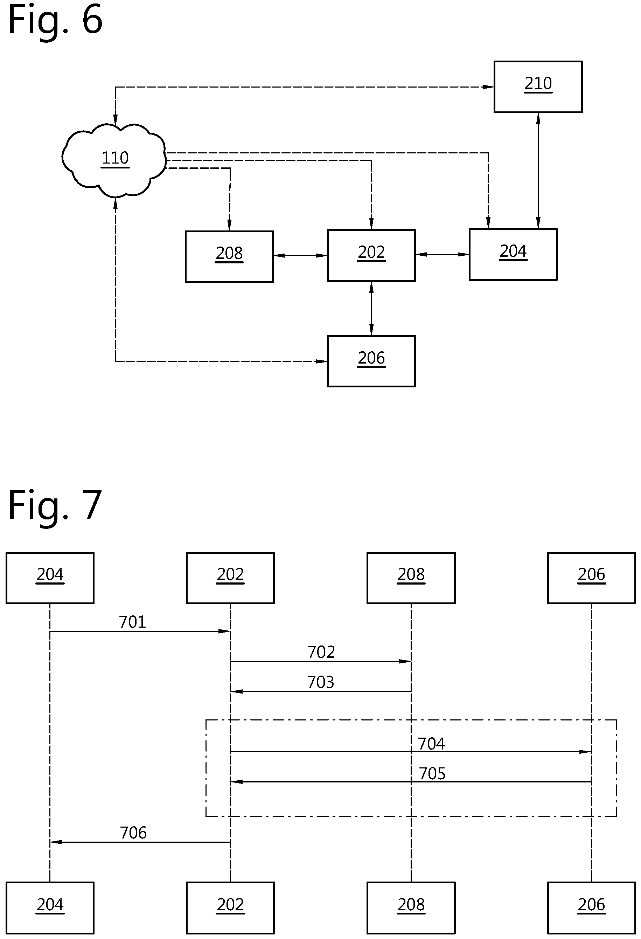

Fig. 6 shows a schematic of a system for hybrid manifest manipulation processing according to an embodiment of the invention. The system of fig. 6 comprises a server device 202, a client device 204, an advertisement server 208, an advertisement media server 206 and an adaptive bitrate (ABR) streaming device 210.

The ABR streaming device 210 is configured to create segments or chunks of video and communicate with the client device 204 in order to transmit a channel manifest including instructions for downloading and playing those video segments. The client device 204 is arranged to communicate with the server device 202. The server device 202 is configured to communicate with the client device 204, the advertisement server 208 and the advertisement media server 206. The server device 202 is configured to receive information of targeted advert(s) to be replaced or added in the channel manifest from the advertisement server 208, process said information and transmit a manipulated manifest corresponding to the advert to be replaced or added.

Fig. 7 shows a schematic of the messages interchange in the system of fig. 6 to provide hybrid manifest manipulation processing according to an embodiment of the invention.

In Fig. 7, when a break is imminent or in progress, the client device 204 transmits a message 701 to the server device 202. The message 701 (e.g. an advertisement placement request) comprises break information (e.g. a break identifier, spot identifier(s)). Optionally, the message 702 may comprise information on the client device (e.g. client device capabilities, client device type like a set top box or smart TV) and information on the channel (e.g. high definition, HD).

After receiving the message 701, the server device 202 transmits a message 702 (e.g. a placement request) to the advertisement server 208 based on the break information for the channel. The message 702 comprises at least part of the received break information. Optionally, based on capabilities of the server device 202 such as processing capabilities, the server device 202 may determine whether to perform a single placement request for the whole break or multiple placement requests one for each spot in the break.

The advertisement server 208, after receiving the message 702 from the server device 202, determines whether an advert is to be replaced or added. If the advert is to be replaced or added, the advertisement server 208 transmits to the server device 202 a message 703 (e.g. a placement response) including an identifier of a spot for which a targeted advert is to be replaced or added and information of the targeted advert to be replaced or added. The message 703 may further comprise additional information to be added to the manifest, for example Video Ad Serving Template (VAST) trackers.

For each advert to be replaced or added as indicated in the message 703, the server device 202 transmits a message 704 (e.g. advertisement manifest request) to an advertisement media server 206. The message 704 comprises information for requesting a manifest of a specific advert. As a response to the message 704, the advertisement media server 206 transmits to the server device 202 a message 705 (e.g. advertisement manifest response) including the advert manifest of said specific advert. The advert manifest may comprise information on multiple versions (i.e. renditions) of the video corresponding to the advert at different qualities to support different network conditions.

After, receiving the advert manifest for each advert to be replaced or added, the server device 202 processes or manipulates the received advert manifests to create manipulated manifest(s).

The processing of the received advert manifests comprises removing renditions on the received advert manifests; and adding metadata associated with monetization of the advert replacement or advert addition.

The removal of renditions comprises the removal of any rendition unsuitable for the client device 204 or the live broadcast channel on which the advert replacement/addition takes place to obtain a manipulated manifest. For example, by removing versions or renditions of a video corresponding to a specific codec, bit rate, video resolution, video frame rate, language, and the like.

The addition of metadata associated with monetization may comprise tracking data, for example VAST trackers, which are included in the message 703 received by the server device 202 from the advertisement server 208.

Optionally, the processing of the received advert manifests may further comprise a protocol adjustment. The protocol adjustment comprises adjusting the protocol in which the advert manifest is manipulated to ensure it follows the protocol of the environment which it is inserted into. A protocol defining manifests is defined in supporting several types of manifests. In case the live channel uses one type of manifest and the adverts use another type of manifest, it is necessary to ensure that the advert manifest meets the protocol requirements of the live manifest in order to allow the advert manifest to be inserted into the live manifest. For example, the protocol adjustment may be adding a Base URL for each video segment into an advert manifest corresponding to a MPEG DASH protocol.

Once the server device 202 has completed the processing of the received advert manifests, the server device 202 transmits to the client device 204 a message 706. The message 706 includes an identifier of a spot (i.e. a spot identifier) and the manipulated manifest corresponding to the advert to be replaced or added in said spot.

As a response to receiving the message 706, the client device 204 monitors an incoming manifest of the live channel looking for makers that have a corresponding spot identifier matching any of the spot identifiers listed in the message 706 from the server device 202. Makers in live channel manifest indicate the stating and/or ending time of breaks and spots. Makers can also include an identification of each break and/or spot, as break identifier and/or spot identifier. For example, makers can be SCTE-35 markers (i.e. makers that follow the SCTE-35 standard). If client detects a match, it replaces the advert in the live manifest with the manipulated data returned from the server device. This replacement process continues until the advert has been completely replaced. The client device will continue to monitor the incoming live manifest for matching spots until either it is informed it should make a new placement request or that the current placement response from the server device is no longer valid.

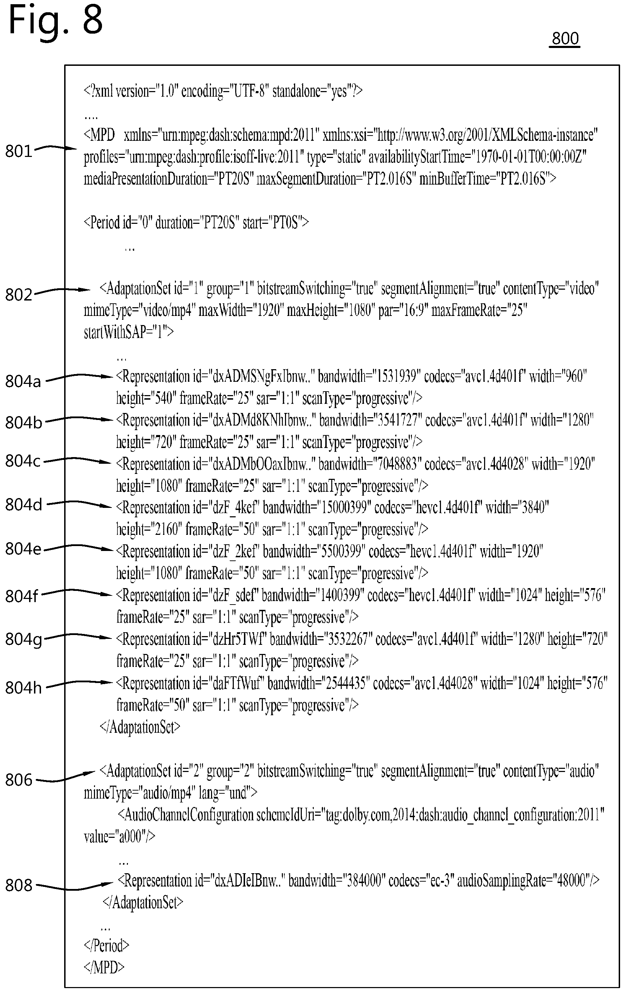

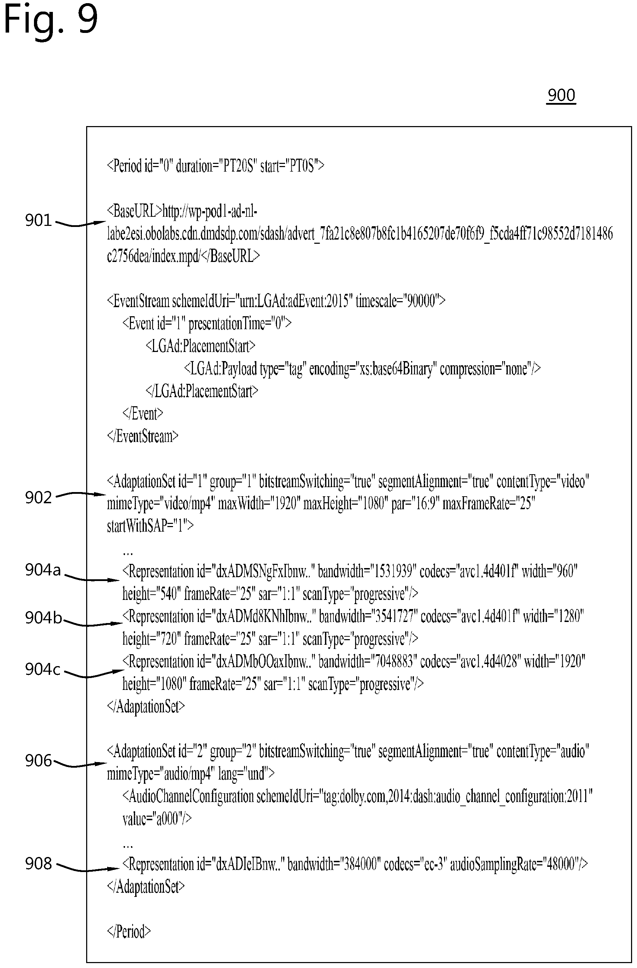

Fig. 8 and Fig. 9 show an example of an advert manifest and a manipulated manifest, respectively, in accordance with Fig. 7.

The advert manifest 800 is a manifest of a specific advert. The advert manifest 800 is transmitted from the advertisement media server 206 to the server device 202. For example, the advert manifest can be included in the message 705 (e.g. advertisement manifest response.

Although, the advert manifest 800, describes hereinafter uses a MPEG-DASH structure, it should be understood that any other suitable structure can be used.

The advert manifest 800 is a file that includes the information needed for reproduction of an avert. The advert manifest 800 comprises Media Presentation Description (MPD) content information 801 about the different media types in the manifest. The different media types are video, audio and data. The MPD content information 801 can include a MPD Profile, a minimum buffer time, a presentation duration, a maximum segment duration, a title, and the like. The advert manifest 800 also comprises a number of adaptation sets 802,806 which catalog the different representations (reeditions) of media, for example a video adaptation set 802 and an audio adaptation set 806. An adaptation set can include one or more representations 804a-804h,808, one for each resolution, bitrate, language available for the specific advert. Each representation represent a rendition. The advert manifest 800 includes 8 renditions for a video and 1 rendition for an audio.

Once the server device 202 receives the advert manifest 800, the server device 202 manipulates the received advert manifest 800 create a manipulated manifest 900. The manipulated manifest 900 comprises a BaseURL 901 and a number of adaptations sets 902,906, each of the adaptations sets comprising one of more representations 9041-904c,908. For each adaptation set in the advert manifest 800, zero or more representations are removed, the remining representations are included in the manipulated manifest 900. The manipulated manifest 900 includes 3 representations 904a-904c for the video which corresponds to the representations 804a-804c of the advert manifest 800, respectively. The representations 804d-804h have been removed by the server device 202 while manipulating the received advert manifest 800.

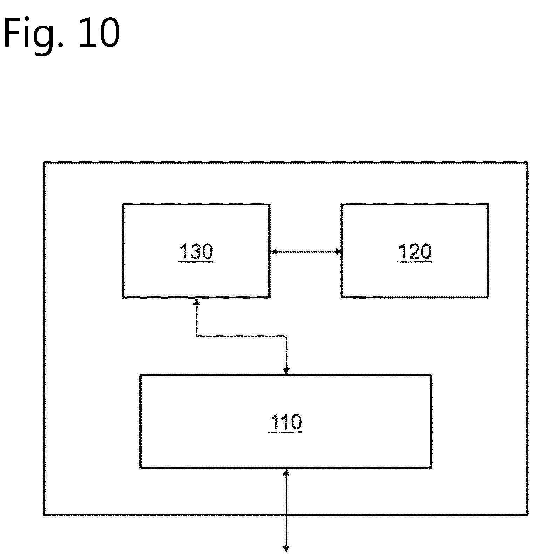

Fig. 10 shows schematically an electronic device which implements an embodiment of the present invention. The electronic device can be any of an advertisement server, a server device, a client device, an advertisement processor, an advertisement media server and an ABR streaming device.

The electronic device comprises a processor 110, a communication unit 120, and a memory unit 130. The processor 110 is connected to the memory unit 130 which store instructions and data. The processor 110 is shown as one box, however, it may comprise several processing units functioning in parallel or controlled by one main processor, that may be located remotely from one another, as is known to persons skilled in the art.

Further, the communication unit 120 is provided for a connection to a network or to another electronic device.

The memory unit 130 may comprise a RAM, a (E)EPROM, a ROM, a tape unit, and/or a hard disk. However, it should be understood that there may be provided more and/or other memory units known to persons skilled in the art. Moreover, one or more of them may be physically located remote from the processor 110, if required.

The processor 110 comprises functionality either in hardware or software components to carry out their respective functions as described in more detail in the description. Skilled persons will appreciate that the functionality of the present invention may also be accomplished by a combination of hardware and software components. As known by persons skilled in the art, hardware components, either analogue or digital, may be present within the processor 110 or may be present as separate circuits which are interfaced with the processor 110. Further it will be appreciated by persons skilled in the art that software components may be present in a memory region of the processor 110.

The electronic device showns in Figure 10 is arranged for performing computations in accordance with any method of the present invention. The electronic device is capable of executing a computer program (or program code) residing on a computer-readable medium which after being loaded in the electronic device allows the electronic device to carry out the method of the present invention.

For example, the invention may take the form of a computer program containing one or more sequences of machine-readable instructions describing a method as disclosed above, or a data storage medium (e.g. semiconductor memory, magnetic or optical disk) having such a computer program stored therein.

The invention is further defined by the following clauses:

1. A method for a server device for load balancing live targeted advertising, the method comprising:

- receiving, from a client device by a communication unit, a break request for a channel;
- determining, by a processor, whether the break request has been received within a current active break window for the channel; and
- if the break request has been received within the current break window for the channel, sending, by the communication unit, to the client device information identifying the current break corresponding to the current active break window of the channel;
- if the break request has not been received within the current break window for the channel, sending, by the communication unit, to the client device a next polling period, wherein the next polling period indicates the client device when to send a further break request for a next break.

2. The method according to clauses 1 further comprising, if the break request has not been received within the current break window for the channel, receiving, by the communication unit, from the client a further break request for the channel after a time period equal to the next polling period has passed from the reception of the break request.

3. The method according to any of the previous clauses wherein the next polling period is a prefetch polling period if the break request has not been received within the current break window for the channel.

4. The method according to any of the previous clauses further comprising, if the break request has been received within the current break window for the channel, sending, by the communication unit, to the client device a next polling period calculated as a random polling period.

5. The method according to clauses 4 wherein the random polling period is calculated, by the processor, based on information identifying the client device.

6. The method according to clauses 5 wherein the information identifying the client device is a positive number and the random period is calculated as:

$$\left(\frac{perfetch\ polling\ period}{2}\right) + Modulo\ \left[\frac{information\ identifying\ the\ client\ device}{\frac{perfetch\ polling\ period}{2}}\right]$$

7. The method according to any of the previous clauses further comprising determining, by the communication unit, whether the break request is a first break request for the channel received from the client device and, if the break request is the first break request, sending to the client the prefetch polling period as the next polling period.

8. The method according to clauses 7 wherein the break request comprises information indicating whether the break request is a first break request for the channel received from the client device and wherein determining whether the break is the first break is based on the information indicating whether the break request is a first break request for the channel received from the client device.

9. The method according to any of the previous clauses, further comprising receiving, from a content provider server, information related to the current break window.

10. The method according to clause 9, wherein the information related to the current break window comprises information identifying spots of the break period of the current active break window.

11. A server device comprising a processor configured to perform the method according to any of the previous clauses.

12. A method for a user device for load balancing live targeted advertising, the method comprising:

- sending, to a server device by a communication unit, a break request for a channel;
- if the break request has been received within a current break window for the channel, receiving, from the server device by the communication unit, information identifying a current break corresponding to the current active break window of the channel;
- if the break request has not been received within the current break window for the channel, receiving, from the server device by the communication unit, a next polling period, wherein the next polling period indicates the client device when to send a further break request for a next break.

13. A client device comprising a processor configured to perform the method according to clause 12.

The examples and embodiments described herein serve to illustrate rather than limit the invention. The person skilled in the art will be able to design alternative embodiments without departing from the scope of the claims. Reference signs placed in parentheses in the claims shall not be interpreted to limit the scope of the claims. Items described as separate entities in the claims or the description may be implemented as a single hardware or software item combining the features of the items described.

**Claims**

1. A method for a server device and client for hybrid manifest manipulation, the method comprising:

   - receiving, from a client device by a communication unit, an advertisement placement request including break information and client device information;
   - receiving, from the advertisement server by the communication unit, information of one or more targeted adverts to be replaced or added;
   - receiving, from an advertisement media server by the communication unit, a manifest of each advert to be replaced or added;
   - manipulating, by a processor, the received manifest of each advert to be replaced or added based on the client device information; and
   - transmitting, to the client device by the communication unit, the manipulated manifest.

2. The method according to claim 1, further comprising:

   - transmitting, to the advertisement server by the communication unit, one or more messages requesting the information on the one or more adverts to be replaced or added based on the break information.

3. The method according to claim 1, further comprises:

   - for each of the one or more adverts to be replaced or added, transmitting, to the advertisement media server by the communication unit, a message requesting the manifest of corresponding advert.

4. The method according to claim 1, wherein the manipulating the received manifest comprises removing, by the processor, renditions of the received advert manifests.

5. The method according to any of claims 1 to 4, wherein the client device information comprises at least one of client device capability and client device type.

6. The method according to claim 4, wherein each of the renditions of the advert manifest corresponds to a different quality version of the advert.

7. The method according to claim 6, further comprising removing, by the processor, renditions corresponding to quality versions of the advert unsuitable for the client device capability or type.

8. The method according to any of claims 1 to 5, wherein the manipulating the received manifest comprises adding metadata associated with monetization of adverts to be replaced or added.

9. A method for a client device for load balancing manifest manipulation, the method comprising:

   - transmitting, to a server device by the communication unit, an advertisement placement request including break information and client device information;
   - receiving, from the server device by the communication unit, a manipulated advert manifest; and
   - modifying, by a processor, a live channel manifest based on the manipulated advert manifest;
   - wherein the manipulated advert manifest has been manipulated in the server device based on the client device information.

# Fig. 1

# Fig. 2

# Fig. 3

# Fig. 4

# Fig. 5

## Fig. 6

## Fig. 7

# Fig. 8

800

```
<?xml version="1.0" encoding="UTF-8" standalone="yes"?>

....

<MPD xmlns="urn:mpeg:dash:schema:mpd:2011" xmlns:xsi="http://www.w3.org/2001/XMLSchema-instance"
profiles="urn:mpeg:dash:profile:isoff-live:2011" type="static" availabilityStartTime="1970-01-01T00:00:00Z"
mediaPresentationDuration="PT20S" maxSegmentDuration="PT2.016S" minBufferTime="PT2.016S">

<Period id="0" duration="PT20S" start="PT0S">

    ...

    <AdaptationSet id="1" group="1" bitstreamSwitching="true" segmentAlignment="true" contentType="video"
mimeType="video/mp4" maxWidth="1920" maxHeight="1080" par="16:9" maxFrameRate="25"
startWithSAP="1">

        ...

        <Representation id="dxADMSNgFxIbnw.." bandwidth="1531939" codecs="avc1.4d401f" width="960"
            height="540" frameRate="25" sar="1:1" scanType="progressive"/>
        <Representation id="dxADMd8KNhIbnw.." bandwidth="3541727" codecs="avc1.4d401f" width="1280"
            height="720" frameRate="25" sar="1:1" scanType="progressive"/>
        <Representation id="dxADMbOOaxIbnw.." bandwidth="7048883" codecs="avc1.4d4028" width="1920"
            height="1080" frameRate="25" sar="1:1" scanType="progressive"/>
        <Representation id="dzF_4kef" bandwidth="15000399" codecs="hevc1.4d401f" width="3840"
            height="2160" frameRate="50" sar="1:1" scanType="progressive"/>
        <Representation id="dzF_2kef" bandwidth="5500399" codecs="hevc1.4d401f" width="1920"
            height="1080" frameRate="50" sar="1:1" scanType="progressive"/>
        <Representation id="dzF_sdef" bandwidth="1400399" codecs="hevc1.4d401f" width="1024" height="576"
            frameRate="25" sar="1:1" scanType="progressive"/>
        <Representation id="dzHr5TWf" bandwidth="3532267" codecs="avc1.4d401f" width="1280" height="720"
            frameRate="25" sar="1:1" scanType="progressive"/>
        <Representation id="daFTfWuf" bandwidth="2544435" codecs="avc1.4d4028" width="1024" height="576"
            frameRate="50" sar="1:1" scanType="progressive"/>
    </AdaptationSet>

    <AdaptationSet id="2" group="2" bitstreamSwitching="true" segmentAlignment="true" contentType="audio"
mimeType="audio/mp4" lang="und">
        <AudioChannelConfiguration schemeIdUri="tag:dolby.com,2014:dash:audio_channel_configuration:2011"
value="a000"/>

        ...

        <Representation id="dxADIeIBnw.." bandwidth="384000" codecs="ec-3" audioSamplingRate="48000"/>
    </AdaptationSet>

    ...
</Period>
</MPD>
```

# Fig. 9

900

```
<Period id="0" duration="PT20S" start="PT0S">

<BaseURL>http://wp-pod1-ad-nl-
labe2esi.obolabs.cdn.dmdsdp.com/sdash/advert_7fa21c8e807b8fc1b4165207de70f6f9_f5cda4ff71c98552d7181486
c2756dea/index.mpd/</BaseURL>

<EventStream schemeIdUri="urn:LGAd:adEvent:2015" timescale="90000">
    <Event id="1" presentationTime="0">
        <LGAd:PlacementStart>
            <LGAd:Payload type="tag" encoding="xs:base64Binary" compression="none"/>
        </LGAd:PlacementStart>
    </Event>
</EventStream>

<AdaptationSet id="1" group="1" bitstreamSwitching="true" segmentAlignment="true" contentType="video"
mimeType="video/mp4" maxWidth="1920" maxHeight="1080" par="16:9" maxFrameRate="25"
startWithSAP="1">

    ...
    <Representation id="dxADMSNgFxIbnw.." bandwidth="1531939" codecs="avc1.4d401f" width="960"
    height="540" frameRate="25" sar="1:1" scanType="progressive"/>
    <Representation id="dxADMd8KNhIbnw.." bandwidth="3541727" codecs="avc1.4d401f" width="1280"
    height="720" frameRate="25" sar="1:1" scanType="progressive"/>
    <Representation id="dxADMbOOaxIbnw.." bandwidth="7048883" codecs="avc1.4d4028" width="1920"
    height="1080" frameRate="25" sar="1:1" scanType="progressive"/>
</AdaptationSet>

<AdaptationSet id="2" group="2" bitstreamSwitching="true" segmentAlignment="true" contentType="audio"
mimeType="audio/mp4" lang="und">
    <AudioChannelConfiguration schemeIdUri="tag:dolby.com,2014:dash:audio_channel_configuration:2011"
    value="a000"/>

    ...
    <Representation id="dxADIeIBnw.." bandwidth="384000" codecs="ec-3" audioSamplingRate="48000"/>
</AdaptationSet>

</Period>
```

Fig. 10

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 799 943 B1 (SHERWIN JEFFREY [US] ET AL) 5 August 2014 (2014-08-05) * the whole document * | 1-9 | INV. H04N21/845 H04L65/1089 H04L65/611 |
| A | US 2022/368963 A1 (LOHEIDE DONALD JUDE [US] ET AL) 17 November 2022 (2022-11-17) * the whole document * | 1-9 | H04N21/234 H04N21/2187 H04N21/262 H04N21/81 |
| A | WO 2014/178872 A2 (THIS TECHNOLOGY INC [US]) 6 November 2014 (2014-11-06) * the whole document * | 1-9 | |

**TECHNICAL FIELDS SEARCHED (IPC)**

H04N
H04L

The present search report has been drawn up for all claims

| Place of search | Date of completion of the search | Examiner |
|---|---|---|
| The Hague | 21 January 2025 | Mannekens, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 4751

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2025

| Patent document cited in search report | | Publication date | Patent family member(s) | | Publication date |
|---|---|---|---|---|---|
| US 8799943 | B1 | 05-08-2014 | NONE | | |
| US 2022368963 | A1 | 17-11-2022 | US | 2019141367 A1 | 09-05-2019 |
| | | | US | 2021058655 A1 | 25-02-2021 |
| | | | US | 2022368963 A1 | 17-11-2022 |
| WO 2014178872 | A2 | 06-11-2014 | BR | 112014029971 A2 | 27-06-2017 |
| | | | CA | 2875845 A1 | 06-11-2014 |
| | | | EP | 2883201 A2 | 17-06-2015 |
| | | | MX | 359563 B | 01-10-2018 |
| | | | WO | 2014178872 A2 | 06-11-2014 |

EPO FORM P0459

For more details about this annex : see Official Journal of the European Patent Office, No. 12/82